# EUROPEAN PATENT SPECIFICATION

(11) **EP 2 980 463 B1**
(45) Date of publication and mention of the grant of the patent: **18.10.2017**
(21) Application number: 14772748.1
(22) Date of filing: 21.02.2014
(51) Int. Cl.: F16K 31/06, F16K 31/40

(54) **BIDIRECTIONAL ELECTROMAGNETIC VALVE**
BIDIREKTIONALES ELEKTROMAGNETISCHES VENTIL
ÉLECTROVANNE BIDIRECTIONNELLE

(30) Priority: 28.03.2013 CN 201310106656
(43) Date of publication of application: 03.02.2016
(73) Proprietor: Zhejiang Sanhua Climate & Appliance Controls Group Co., Ltd., Shaoxing, Zhejiang 312500 (CN)
(72) Inventor: WANG, Yudong, Zhejiang 312500 (CN); YAN, Weilin, Zhejiang 312500 (CN)
(74) Representative: Lavoix
(86) International application number: PCT/CN2014/072352
(87) International publication number: WO 2014/154071

(56) References cited:
- CN-A- 101 994 860
- CN-A- 102 032 382
- CN-A- 102 996 883
- JP-A- H06 101 780
- US-A- 5 072 752
- US-A1- 2004 195 532
- US-A1- 2007 290 151
- US-A1- 2007 290 153
- US-A1- 2010 155 633
- US-B1- 6 328 275

## Description

### FIELD OF THE INVENTION

The present application relates to the technical field of valve bodies, and particularly to a bidirectional electromagnetic valve.

### BACKGROUND OF THE INVENTION

A common electromagnetic valve, due to structural limitations, can be only communicated or not communicated in one direction. In a traditional system, a one-way valve is often required to be used cooperatively. In cooling and heating processes of a heat pump system, refrigerant flows in opposite directions, which requires two one-way electromagnetic valves to be connected in series to achieve bidirectional communication, resulting in a complicated system structure, a low reliability, and a high cost, therefore, a bidirectional electromagnetic valve is required to be designed.

US2010155633 A1 discloses a control valve, which includes a main poppet that moves in response to pressure in a primary control chamber and thereby controls the flow of fluid through a valve seat between first and second ports. A passageway extends between the second port and the primary control chamber and includes a variable flow restriction that decreases as the main poppet moves away from the valve seat. An electrohydraulic pilot valve has a pilot poppet which controls fluid flow from the primary control chamber to the first port in response to pressure in a pilot control chamber. A sub-pilot valve selectively releases pressure in the pilot control chamber to operate the pilot poppet to open and close a path between the inlet and the outlet. Using an electrohydraulic pilot valve enables the main poppet to operate quickly in controlling large fluid flow rates.

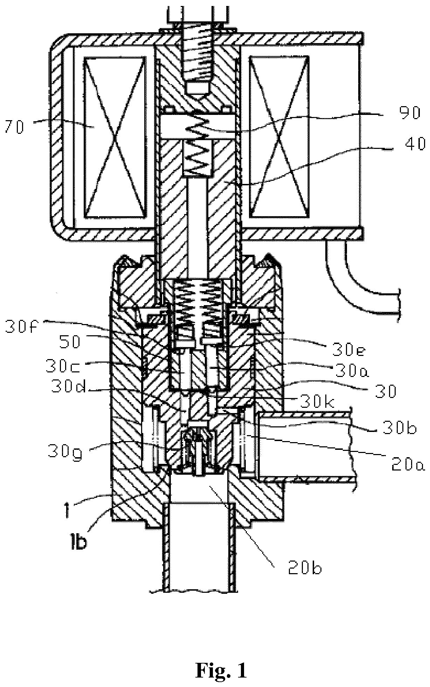

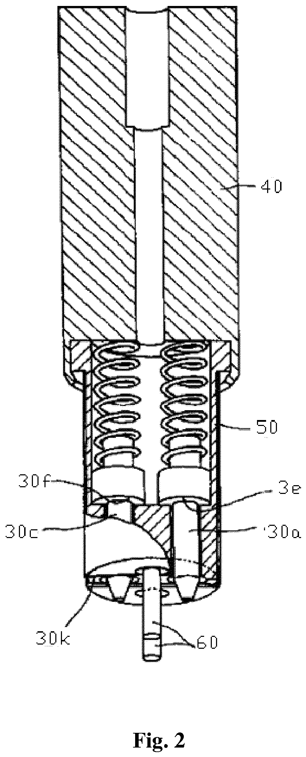

Reference is made to Figures 1 to 2. Figure 1 is a schematic view showing the structure of a typical bidirectional electromagnetic valve. Figure 2 is a schematic view showing the structure of a pilot valve head and a movable iron core of the bidirectional electromagnetic valve in Figure 1.

The bidirectional electromagnetic valve is a linear electromagnetic valve, which includes a main valve body 1 and a pilot valve body arranged up and down. In the pilot valve body, a coil 70, and a static iron core and a movable iron core 40 cooperated with each other are provided, and a pilot valve head 50 fixed to the movable iron core 40 are further provided. A piston 30 is provided in a valve cavity of the main valve body 1, and a piston cavity is formed above the piston 30 after the piston 30 is mounted. The main valve body 1 is further provided with a first connecting port 20a and a second connecting port 20b which are respectively connected to a first connecting port tube and a second connecting port tube. As shown in Figure 1, when the piston 30 is moved upward, the piston 30 is moved away from a valve port 1b, such that the first connecting port 20a and the second connecting port 20b are communicated. The pilot valve head 50 is integrally connected with the movable iron core 40, and when the coil 70 of the bidirectional electromagnetic valve is energized, the pilot valve head 50 is moved upward and away from the piston 30 by the movable iron core 40 under a magnetic force. When the coil 70 of the bidirectional electromagnetic valve is de-energized, a spring 90 is reset, the movable iron core 40 pushes the pilot valve head 50 to move downward to be closely abut against the piston 30, thereby closing the valve port 1b.

The piston 30 is provided with a first piston flow passage 30k and a second piston flow passage 30d. The first piston flow passage 30k is in communication with the first connecting port 20a via an inlet flow passage 30b arranged on the piston 30, and the second piston flow passage 30d is in communication with the second connecting port 20b via a one-way valve 30g. The pilot valve head 50 is provided with a first check valve 30e and a second check valve 30f. As shown in Figure 1, a valve core 30a of the first check valve and a valve core 30c of the second check valve are inserted in sockets of the pilot valve head 50 for respectively being aligned with and block the first piston flow passage 30k and the second piston flow passage 30d. The operating principle of the bidirectional electromagnetic valve is as follows.
a. in the case that the refrigerant enters from the first connecting port 20a,
   when the coil 70 is de-energized:
   the pilot valve head 50 is at a position as shown in Figure 1, in this case, the piston 30 closely abuts against the valve port 1b under the spring 90 by the pilot valve head 50, and the first connecting port 20a and the second connecting port 20b cannot be communicated directly. In this case, the refrigerant firstly passes the first connecting port 20a, and then the inlet flow passage 30b, and then the first piston flow passage 30k, and then forces the first check valve 30e to open, and further passes the piston cavity above the piston 30. In this case, under the refrigerant with high pressure, the second check valve 30f is closed, and the refrigerant cannot flow to the second connecting port 2b via the second piston flow passage 30d. Thus the first connecting port 20a and the second connecting port 20b are disconnected, and the bidirectional electromagnetic valve is closed.
   when the coil 70 is energized:
   a magnetic field is generated in the coil 70, and the movable iron core 40 pulls the pilot valve head 50 to get close to the static iron core, and the first check valve 30e and the second check valve 30f are respectively disengaged from the first piston flow passage 30k and the second piston flow passage 30d. In this case, the refrigerant firstly passes the first connecting port 20a, and then the inlet flow passage 30b, and then the first piston flow passage 30k, and then the second piston flow passage 30d, and forces the one-way valve 30g to open, and further passes the second connecting port 20b. Since the cross-sectional area of the inlet flow passage 30b is smaller than the cross-sectional area of the second piston flow passage 30d, the volume of the refrigerant flowing into the piston cavity above the piston 30 is smaller than the volume of the refrigerant flowing out, thus the pressure of the refrigerant above the piston 30 is reduced. Then, the piston 30 is moved upward under a pressure difference across the piston 30 to be disengaged from the valve port 1b, and the first connecting port 20a and the second connecting port 20b are communicated directly, thus the bidirectional electromagnetic valve is opened.
b. in the case that the refrigerant enters from the second connecting port 20b,
   when the coil 70 is de-energized:
   the refrigerant passes the second connecting port 20b, and then a small inlet hole in the one-way valve 30g, and then the second piston flow passage 30d, and forces the second check valve 30f to open, and further passes the piston cavity above the piston 30. At this moment, under the refrigerant with high pressure, the first check valve 30e is closed, and the refrigerant cannot flow to the first connecting port 2a via the first piston flow passage 30k. Thus, the first connecting port 20a and the second connecting port 20b are disconnected, and the bidirectional electromagnetic valve is closed.
   when the coil 70 is energized:
   as described above, the pilot valve head 50 is moved upward, and the refrigerant in passes the second connecting port 20b, and then the small inlet hole of the one-way valve 30g, and then the second piston flow passage 30d, and then the first piston flow passage 30k, and then the inlet flow passage 30b, and then the first connecting port 20a. Since the cross-sectional area of the small inlet hole is smaller than the cross-sectional area of the inlet flow passage 30b, the volume of the refrigerant flowing into the upper side of the piston 30 is small, and the volume of the refrigerant flowing out is large, allowing the pressure of the refrigerant above the piston 30 to be reduced. Then, the piston 30 is moved upward under the pressure difference across the piston 30 and disengaged from the valve port 1b, thus the first connecting port 20a and the second connecting port 20b are communicated directly, and the bidirectional electromagnetic valve is opened.

From the operating principle of the above bidirectional electromagnetic valve, it can be known that a certain relationship among the cross-sectional areas of the inlet flow passage 30b (for the refrigerant entering and flowing out), two piston flow passages, the passage (for the refrigerant flowing out) where the one-way valve 30g is located, the small inlet hole (for the refrigerant entering) of the one-way valve 30g in design should be satisfied, which is used for forming the pressure difference. In practice, in Figure 1, the first piston flow passage 30k for the refrigerant flowing out is in communication with the inlet flow passage 30b for the refrigerant flowing into, and the second piston flow passage 30d for the refrigerant flowing out is in communication with the passage for the refrigerant entering into small inlet hole of the one-way valve 30g.

The above bidirectional electromagnetic valve has the following technical defects.

Firstly, in the case that the electromagnetic valve requires a large flow amount, the valve port 1b will be enlarged, correspondingly, the stroke of the piston 30 is required to be increased, and the stroke of the pilot valve head 50 is required to be increased correspondingly, and the stroke of the movable iron core 40 is also required to be increased correspondingly, however, as the stroke of the movable iron core 40 increases, an attracting force which can be provided by the coil 70 is decreased, and the opening capacity of the valve body 1 is weakened drastically. In addition, the electromagnetic valve may also have an increased height. If the coil 70 is enlarged, a series of problems such as large power, high temperature may arise, and the volume of the electromagnetic valve may also be increased.

Secondly, in the bidirectional opening and closing processes of the electromagnetic valve, the valve core 30a of the first check valve and the valve core 30c of the second check valve must be respectively aligned with the first piston flow passage 30k and the second piston flow passage 30d all the time, and can not be moved radially, otherwise, the valve cores of the two check valves cannot achieve sealing function, causing the bidirectional electromagnetic valve cannot be opened or closed normally. For avoiding this problem, the pilot valve head 50 is provided with two guiding rods 60, and the piston 30 is provided with guiding holes at positions corresponding to the two guiding rods 60. It may be appreciated by reference to Figure 2 that, the guiding rods 60 can be inserted in the guide holes all the time, which allows the valve cores of the check valves to be always aligned with the corresponding piston flow passages. Thus the pilot valve head 50 may have a complicated structure, manufacturing difficulties and a high cost assembly process, even so, the control accuracy is still not ideal.

In view of this, a technical problem to be solved presently by the person skilled in the art is to meet a requirement for the bidirectional electromagnetic valve to have a large flow amount without affecting the valve opening capacity and changing the size of the coil.

### SUMMARY OF THE INVENTION

To solve the above technical problems, a bidirectional linear electromagnetic valve is provided by the present application, which allows the stroke of a piston to be separated from the stroke of a pilot valve head, meeting large flow requirement without affecting the opening capacity of the electromagnetic valve and changing the size of a coil.

The bidirectional electromagnetic valve according to the present application is defined in claim 1.

The first flow passage and the second flow passage which respectively communicate the piston cavity with the first connecting port and the piston cavity with the second connecting port when the electromagnetic valve is operated are arranged in the main valve body, correspondingly, the pilot valve head is only required to be in cooperation with the main valve body instead of the piston, thus the stroke of the piston and the stroke of the pilot valve head are separated from each other. Therefore, the electromagnetic valve of this structure has the following technical advantages.

Firstly, in the case that the electromagnetic valve requires a large flow amount, the valve port is enlarged, the stroke of the piston is increased as well, however, the stroke of the movable iron core does not need to be increased, thus the valve opening capacity of the valve body may not be affected, and the height of the electromagnetic valve is not required to be increased. Based on this, the coil is not required to be enlarged, thereby the technical defects existed in the technical solutions of the background technology have been overcome.

Since the pilot valve head is separated from the piston, it may not be required to design the cavity and the spring located in the cavity as shown in Figure 1 between the pilot valve head and the movable iron core, thus the structure of the pilot valve head is simple.

Secondly, the pilot valve head and the main valve body are cooperated, and the main valve body is a stationary component and has a steady state, thus during the bidirectional opening and closing of the electromagnetic valve, the pilot valve head and the main valve body are not easy to be displaced. Compared with the background technology, the closing performance of the pilot valve port is not easy to be affected by the displacement. Thus, the main valve body and the pilot valve head do not requires complicated guide members. Compared with the background technology, apparently, the structure is simplified, and the manufacturing difficulties and the cost of assembly process are reduced, and the control accuracy may be satisfied.

Preferably, the bidirectional electromagnetic valve has one pilot valve port; and a one-way valve is arranged in each of the first flow passage and the second flow passage for respectively communicating the pilot valve port with the first connecting port and communicating the pilot valve port with the second connecting port.

The control is easy and the structure is simplified by controlling the communication and non-communication of the first flow passage and the piston cavity as well as the second flow passage and the piston cavity via one pilot valve port.

According to claim 1, the pilot valve body is arranged on a side wall of the main valve body.

Arranging the pilot valve body on the side wall facilitates the arrangement of the electromagnetic valve.

According to claim 1, the first connecting port is arranged on a side wall of the main valve body, and the second connecting port is arranged at an end of the main valve body provided with a valve port.

Such design of the first connecting port and the second connecting port facilitates controlling the communication and non-communication by the piston.

According to claim 1, the pilot valve body is located at an end, close to the valve port, of the main valve body.

In such design, the communication of the two connecting ports with the piston cavity can be achieved by a short first flow passage and a short second flow passage.

According to claim 1, the pilot valve body is corresponding to the position of the second connecting port.

In this case, the length of the second flow passage may be further reduced, and the manufacturing difficulties may be reduced.

According to claim 1, an annular front valve chamber for communicating with the first connecting port is formed between an out wall of the piston at an end close to the valve port and an inner wall of the main valve body, the first flow passage is in communication with the first connecting port via the front valve chamber.

In this way, the length of the first flow passage is reduced on the basis of reducing the length of the second flow passage. Furthermore, the front valve chamber may also be regarded as a portion of the first flow passage. A portion of the flow passage is formed by the space in the valve cavity, which reduces the manufacturing difficulties. Furthermore, the arrangement of the front valve chamber also facilitates the arrangement of the inlet equilibrium hole.

Preferably, the first flow passage is in communication with the second flow passage at a position between the pilot valve port and the second one-way valve.

Such communication facilitates the cooperative arrangement of the pilot valve port and the pilot valve head while achieving controlling the communication and non-communication by the same pilot valve port.

Preferably, the pilot valve flow passage is arranged in a longitudinal direction of the main valve body.

The longitudinal arrangement may allow the length of the pilot valve flow passage to be smallest, in order to decrease the stroke of the refrigerant in the pilot valve flow passage and allow the refrigerant to rapidly enter into the pilot valve port from the piston cavity.

Preferably, the bidirectional electromagnetic valve includes a pilot valve cavity, wherein the piston cavity is in communication with the pilot valve cavity via the pilot valve flow passage; in the case that the pilot valve port is opened, the first flow passage and the second flow passage are in communication with the piston cavity via the pilot valve cavity.

After the pilot valve cavity is provided, the communication relationship between the pilot valve flow passage, the two flow passages and the pilot valve port is easier to be implemented and manufactured.

Preferably, a movable iron core provided in the pilot valve body is the pilot valve head.

The movable iron core acts as the pilot valve head, thus the entire pilot valve body has a simple structure and a small volume.

Preferably, the main valve body includes a valve seat in a cylindrical shape and a valve closure located at one end of the valve seat.

An upper valve body in an end cover shape occupies a small volume capable of arranging two upper flow passages, which facilitates installation. Furthermore, the piston cavity is mainly formed by a lower valve body, which facilitates effective assembly of the piston. Also the piston and the wall of the valve can be sealed.

### BRIEF DESCRIPTION OF THE DRAWINGS

Figure 1 is a schematic view showing the structure of a typical bidirectional electromagnetic valve;
Figure 2 is a schematic view showing the structure of a pilot valve head and a movable iron core of the bidirectional electromagnetic valve shown in Figure 1;
Figure 3 is an axial sectional view of a linear bidirectional electromagnetic valve according to a first embodiment not forming part of the claimed invention;
Figure 4 is a sectional view of Figure 3 taken along direction A-A;
Figure 5 is a schematic view showing the structure of a valve seat in Figure 3;
Figure 6 is a schematic view showing the structure of the valve seat in Figure 4;
Figure 7 is a schematic view showing the structure of a valve closure in Figure 3;
Figure 8 is an axial sectional view of a bidirectional electromagnetic valve according to a second embodiment of the present application;
Figure 9 is a schematic view indicating flow passages in Figure 8;
Figure 10 is a schematic view showing the structure of a valve seat of the bidirectional electromagnetic valve in Figure 8;
Figure 11 is a partially enlarged schematic view showing portion B in Figure 10; and
Figure 12 is a schematic view showing the structure of a stop ring in Figure 11.

**Reference numerals in Figures 1 to 2:**

| | | | |
|---|---|---|---|
| 1 | valve body, | 1b | valve port, |
| 20b | second connecting port, | 20a | first connecting port, |
| 30 | piston, | 30b | inlet flow passage, |
| 30e | first check valve, | 30f | second check valve, |
| 30a | valve core of first check valve, | 30c | valve core of second check valve, |
| 30k | first piston flow passage, | 30d | second piston flow passage, |
| 30g | check valve, | 40 | movable iron core, |
| 50 | pilot valve guide, | 60 | guiding rod, |
| 70 | coil, | 90 | spring. |

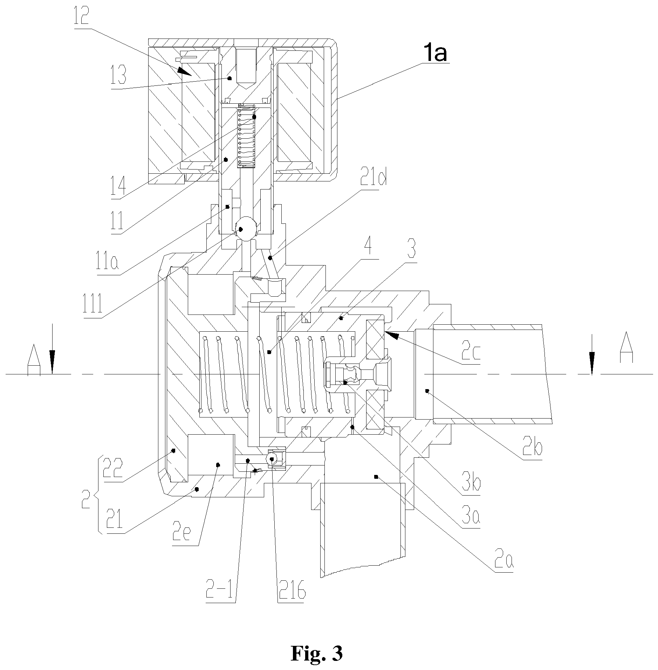

**Reference numerals in Figures 3 to 12:**

| | | | |
|---|---|---|---|
| 1a | pilot valve body, | 11 | pilot valve head, |
| 111 | steel ball, | 11a | pilot valve cavity, |
| 12 | coil, | 13 | static iron core, |
| 14 | pilot valve spring; | 2 | main valve body, |
| 2-1 | first flow passage, | 2-2 | second flow passage, |
| 2a | first connecting port, | 2b | second connecting port, |
| 21 | valve seat, | 21d | pilot valve flow passage, |
| 2e | rear valve chamber, | 2f | front valve chamber, |
| 216 | first one-way valve, | 216a | seal ball, |
| 216b | stop ring, | a | base ring, |
| b | side wall, | c | top wall, |
| 215 | second one-way valve, | 217 | groove, |
| 22 | valve closure, | 221 | annular groove, |
| 3 | piston, | 3a | inlet equilibrium hole, |
| 3b | one-way inlet valve, | 4 | piston cavity. |

### DETAILED DESCRIPTION OF THE INVENTION

For those skilled in the art to better understand technical solutions of the present application, the present application is described in detail in conjunction with drawings and embodiments hereinafter.

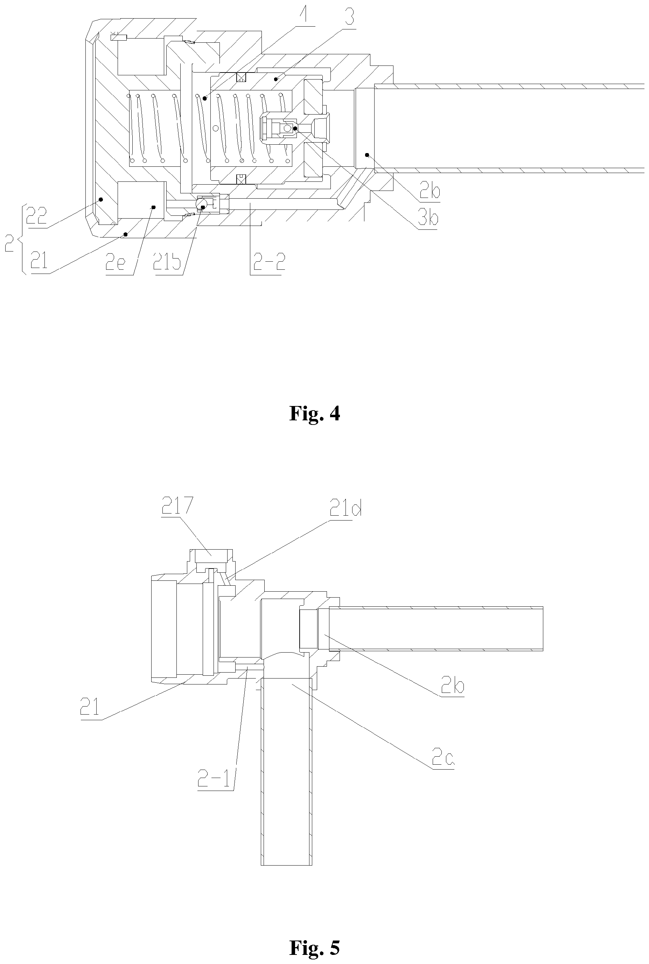

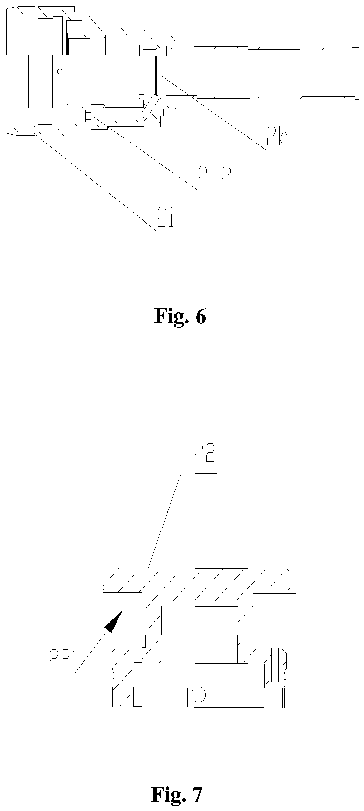

Reference is made to Figures 3 to 7. Figure 3 is an axial sectional view of a bidirectional linear electromagnetic valve according to a first embodiment not forming part of the claimed invention. Figure 4 is a sectional view of Figure 3 taken along A-A. Figure 5 is a schematic view showing the structure of a valve seat in Figure 3. Figure 6 is a schematic view showing the structure of the valve seat in Figure 4. Figure 7 is a schematic view showing the structure of a valve closure in Figure 3.

The bidirectional electromagnetic valve has a main valve body 2, a pilot valve body 1a. A valve cavity formed by the main valve body 2 is provided with a piston 3 therein for further forming a piston cavity 4. The main valve body 2 is provided with a first connecting port 2a and a second connecting port 2b, and the two connecting ports are controlled to be in communication and non-communication by an axial movement of the piston 3. As shown in Figure 3, after the piston 3 is moved to the left, the first connecting port 2a and the second connecting port 2b may be communicated directly. Also viewed from Figure 3, the piston cavity 4 is a cavity on a left side of the piston 3, and when refrigerant is located in the piston cavity 4, the piston 3 is closed under high pressure. A spring is further provided in the piston cavity 4, and the reset force of the spring allows the piston 3 to press against a valve port 2c of the bidirectional electromagnetic valve in case of being not subjected to other external force.

A coil 12 and, a static iron core 13 and a movable iron core cooperated with each other, are provided in the pilot valve body 1a. The movable iron core in this embodiment is the pilot valve head 11. When the coil 12 is energized, the static iron core 13 and the pilot valve head 11 are attracted to each other. When the coil 12 is de-energized, the static iron core 13 and the pilot valve head 11 are separated from each other under the resetting action of the pilot valve spring 14.

In order to achieve the bidirectional connection and disconnection function, the electromagnetic valve has a first flow passage 2-1 (Figure 3) and a second flow passage 2-2 (Figure 4) for allowing the refrigerant to flow out of the piston cavity 4.

The first flow passage 2-1 and the second flow passage 2-2 communicate the piston cavity 4 respectively with the first connecting port 2a and the second connecting port 2b in the case that the pilot valve port is opened. It may be appreciated by reference to the background technology that, in the case that the electromagnetic valve is operated, the pilot valve head 11 is moved under the magnetic force of the coil 12, and the pilot valve port is opened, thus allowing the piston cavity 4 to communicate with the first connecting port 2a and the second connecting port 2b via the first flow passage 2-1 or the second flow passage 2-2 in order to form a pressure difference across the piston 3 and open the valve port 2c. It may be conceived that, when designing the inlet flow passage of the refrigerant, the cross-sectional area of the inlet flow passage for the refrigerant flowing into the piston cavity 4 should be designed such that the requirement for forming the pressure difference can be satisfied after being cooperated with the first flow passage 2-1 and the second flow passage 2-2, which may be appreciated by reference to the background technology and the following embodiments.

In this embodiment, the first flow passage 2-1 and the second flow passage 2-2 of the electromagnetic valve for the refrigerant flowing out of the piston cavity 4 are both arranged in the main valve body 2, i.e., arranged in a solid body of the main valve body 2. The terms "arranged in" in this description have the same meaning of being arranged in the solid body of the main valve body 2. The main valve body 2 in Figure 3 corresponds to the housing of the electromagnetic valve, and in this case, the first flow passage 2-1 and the second flow passage 2-2 are just arranged in the housing.

In addition, the main valve body 2 is provided with a pilot valve flow passage 21d therein, and the piston cavity 4 is in communication with a pilot valve cavity 11a of the bidirectional electromagnetic valve via the pilot valve flow passage 21d, i.e., the pilot valve cavity 11a and the piston cavity 4 are kept in communication with each other. In this embodiment, the pilot valve cavity 11a is formed by coupling the pilot valve body 1a and the main valve body 2. The moving of the pilot valve head 11 can open and close the pilot valve port of the pilot valve cavity 11a. As shown in Figure 3, when the coil 12 is energized, the pilot valve head 11 is moved upward such that the pilot valve port is opened; and when the coil 12 is de-energized, the pilot valve head 11 blocks the pilot valve port. For allowing the pilot valve port to be sealed when it is closed, an end portion of the pilot valve head 11 may employ a steel ball 111 shown in the figure. Apparently, the end portion of the pilot valve head 11 may also be designed as a conical shape, a truncated tapered shape.

Then, when the pilot valve port is opened, the pilot valve cavity 11a may be communicated with the first flow passage 2-1 and the second flow passage 2-2, and when the pilot valve port is closed, the pilot valve cavity 11a may not be communicated with the first flow passage 2-1 and the second flow passage 2-2. Since the pilot valve cavity 11a is in communication with the piston cavity 4, the opening and closing of the pilot valve port may achieve the communication and non-communication of the piston cavity 4 and the first flow passage 2-1 and the second flow passage 2-2.

In this embodiment, the first flow passage 2-1 and the second flow passage 2-2, which respectively communicate the piston cavity 4 with the first connecting port 2a and the second connecting port 2b when the electromagnetic valve is operated, are arranged in the main valve body 2, correspondingly, the pilot valve head 11 is only required to be cooperated with the main valve body 2 and not required to be cooperated with the piston 3, thus the stroke of the piston 3 and the stroke of the pilot valve head 11 may be separated. Therefore, the electromagnetic valve in such structure has the following technical advantages.

Firstly, in the case that the electromagnetic valve requires a large flow amount, the valve port 2c is enlarged, the stroke of the piston 3 is increased as well, however, the stroke of the movable iron core (the pilot valve head 11 in Figure 3 is just the movable iron core) does not need to be increased, thus the valve opening capacity of the valve body may not be affected, and the height of the electromagnetic valve does not have to be increased. Based on this, the coil 12 does not have to be enlarged, thereby the technical defects presented in the technical solutions of the background technology have been overcome.

It can be conceived that since the pilot valve head 11 is separated from the piston 3, it may not be required to design the cavity and the spring 90 to be located in the cavity as shown in Figure 1 between the pilot valve head 11 and the movable iron core, such that the structure of the pilot valve head 11 is simple. Furthermore, as shown in Figure 3, the movable iron core in cooperation with the coil 12 and the static iron core 13 may just act as a pilot valve head 11, thus the entire pilot valve body 1a has a very simple structure and a small volume. Apparently, the movable iron core and the pilot valve head 11 may also be provided separately.

Secondly, the pilot valve head 11 is cooperated with the main valve body 2, and the main valve body 2 is a stationary component, and has a steady state. Thus during the bidirectional opening and closing of the electromagnetic valve, the pilot valve head 11 and the main valve body 2 are not easy to be displaced. Compared with the background technology, the closing performance of the pilot valve port is not easy to be affected by the displacement. Thus, the main valve body 2 and the pilot valve head 11 are not required to provide a complicated guiding member. Compared with the background technology, the structure is obviously simplified, and the manufacturing difficulties and the cost of assembly process are reduced, and the control accuracy can be satisfied.

Compared with the background technology, the pilot valve port is separated from the piston 3 and is arranged in the main valve body 2. For allowing the opening and closing of the pilot valve port to control the communication and non-communication of the piston cavity 4 and both of the first flow passage 2-1 and the second flow passage 2-2, the pilot valve flow passage 21d is provided, and the pilot valve cavity 11a is further provided, and the pilot valve cavity 11a act as an intermediate passage between the piston cavity 4 and the two flow passages. In practical, the pilot valve cavity 11a may not be arranged, and the pilot valve flow passage 21d and the two flow passages may be all connected to the pilot valve port. The pilot valve cavity 11a is provided only because the connection relationship between the pilot valve flow passage 21d, the two flow passages and the pilot valve port is easier to be implemented, and the practical manufacture is facilitated.

From the operating principle of the bidirectional electromagnetic valve, it can be known that when the coil 12 is energized, the first flow passage 2-1 and the second flow passage 2-2 are respectively required to communicate the piston cavity 4 with the first connecting port 2a and the second connecting port 2b. Correspondingly, the first flow passage 2-1, the second flow passage 2-2 and the two connecting ports and the pilot valve port may be designed in a number of manners.

Reference is made to Figures 3 to 6. In this embodiment, the pilot valve port is communicated with the first connecting port 2a in one way and with the second connecting port 2b in one way respectively by the first flow passage 2-1 and the second flow passage 2-2. Thus, a first one-way valve 216 is provided between the first flow passage 2-1 and the pilot valve port, and a second one-way valve 215 is provided between the second flow passage 2-2 and the pilot valve port, thus the refrigerant can flow to the first flow passage 2-1 and to the second flow passage 2-2 only from the pilot valve port.

In this case, the inlet flow passage of the refrigerant may still be provided on the piston 3. In Figure 3, a one-way inlet valve 3b is provided on the piston 3 to communicate the second connecting port 2b with the piston cavity 4 in one way, and an inlet equilibrium hole 3a is further provided on the piston 3 to communicate the piston cavity 4 with the first connecting port 2a. The inlet equilibrium hole 3a and the one-way inlet valve 3b are arranged at positions respectively corresponding to positions of the first connecting port 2a and the second connecting port 2b. As shown in Figure 3, in addition, a rear valve chamber 2e is further provided at an end of the main valve body 2 away from the valve port 2c, and the rear valve chamber 2e and the piston 3 are separated from each other. Both of the first flow passage 2-1 and the second flow passage 2-2 are in communication with the rear valve chamber 2e. When the coil 12 is energized, the rear valve chamber 2e is in communication with the piston cavity 4 via the pilot valve port.

The operating principle of the bidirectional electromagnetic valve is as follows.
a1. In the case that the refrigerant enters from the first connecting port 2a,
   when the coil 12 is de-energized,
   the pilot valve head 11 is in a position as shown in Figure 3, i.e., the steel ball 111 of the pilot valve head 11 blocks the pilot valve port, and the refrigerant with high pressure, which flows into the pilot valve cavity 11a via the pilot valve flow passage 21d, cannot enter into the second flow passage 2-2 via the pilot valve port, i.e., the piston cavity 4 and the second connecting port 2b are not in communication. In this case, the refrigerant may firstly pass the first connecting port 2a, and then the inlet equilibrium hole 3a, and then the piston cavity 4, and then the pilot valve flow passage 21d, and then the pilot valve cavity 11a. Alternatively, the refrigerant may be blocked at the first one-way valve 216 after flowing through the first flow passage 2-1. The piston 3 cannot be moved under the refrigerant with high pressure in the piston cavity 4, the first connecting port 2a and the second connecting port 2b are not in communication, and the electromagnetic valve is closed.
   When the coil 12 is energized:
   the pilot valve head 11 is moved upward under the magnetic force from the position shown in Figure 3, and the steel ball 111 of the pilot valve head 11 disengages from the pilot valve port, thus, the refrigerant with high pressure flows to the second flow passage 2-2, thereby opening the second one-way valve 215 and communicating with the second connecting port 2b. In this case, the refrigerant may firstly pass the first connecting port 2a, and then the inlet equilibrium hole 3a, and then the piston cavity 4, and then the pilot valve flow passage 21d, and then the pilot valve cavity 11a, and then the rear valve chamber 2e, and then the second flow passage 2-2 (forcing the second one-way valve 215 to open), and then the second connecting port 2b. In design, the cross-sectional area of the inlet equilibrium hole 3a is smaller than the cross-sectional area of the second flow passage 2-2, thus the volume of the refrigerant flowing into the piston cavity 4 is smaller than the volume of the refrigerant flowing out, and the pressure difference is generated across the piston 3, and then the piston 3 is moved to the left, thus the valve port 2c of the electromagnetic valve is opened, then the first connecting port 2a and the second connecting port 2b are in direct communication, and the electromagnetic valve is opened.
b1. In the case that the refrigerant enters from the second connecting port 2b.

When the coil 12 is de-energized:
the pilot valve head 11 is in a position as shown in Figure 3, as described above, the pilot valve port is closed, and the refrigerant with high pressure cannot enter into the first flow passage 2-1 via the pilot valve port, i.e., the piston cavity 4 is not in communication with the first connecting port 2a. In practical, the refrigerant still flows at a certain flow rate between the piston cavity 4 and the first connecting port 2a, i.e., a certain quantity of refrigerant flows through the inlet equilibrium hole 3a to the first connecting port 2a. In this case, the refrigerant may firstly pass the second connecting port 2b, and then the one-way inlet valve 3b, and then the piston cavity 4, and then the pilot valve flow passage 21d, and then the pilot valve cavity 11a. Alternatively, the refrigerant may enter into the second flow passage 2-2 through the second connecting port 2b and is blocked at the second one-way valve 215. The piston 3 cannot be moved under the refrigerant with high pressure in the piston cavity 4. The first connecting port 2a and the second connecting port 2b are not in communication, and the electromagnetic valve is closed.

If the coil 12 is energized:
the pilot valve head 11 is moved upward from a position shown in Figure 3 under a magnetic force, and the steel ball 111 of the pilot valve head 11 disengages from the pilot valve port, thus the refrigerant with high pressure in the pilot valve cavity 11a may flow to the first flow passage 2-1 through the pilot valve port, and the first one-way valve 216 is opened for communicating with first connecting port 2a. Thus, the path for the refrigerant is: the second connecting port 2b-the piston cavity 4-the pilot valve flow passage 21d- the pilot valve cavity 11a-the rear valve chamber 2e-the first flow passage 2-1 (forcing the first one-way valve 216 to open)-the first connecting port 2a. The cross-sectional area of the inlet flow passage of the one-way inlet valve 3b is designed to be smaller than the cross-sectional area of the first flow passage 2-1, then the volume of the refrigerant flowing into the piston cavity 4 is smaller than the volume of the refrigerant flowing out, and the pressure difference is generated across the piston 3. The piston 3 is moved to the left, and the valve port 2c of the electromagnetic valve is opened. Thus, the first connecting port 2a and the second connecting port 2b are in direct communication, and the electromagnetic valve is opened.

In the above embodiment, a one-way valve may further be arranged at the inlet equilibrium hole 3a to communicate the first connecting port 2a with the piston cavity 4 in one way, such that the refrigerant is prevented from flowing to the first connecting port 2a from the second connecting port 2b via the inlet equilibrium hole 3a. Apparently, in practical application, for the current bidirectional electromagnetic valve, the inlet equilibrium hole 3a with a very small diameter may achieve the requirement of usage, for example, a diameter of about 0.5mm, however, in this case, the communication area is relatively small, and when the refrigerant enters into the second connecting port 2b, the amount of the refrigerant directly flowing through the inlet equilibrium hole 3a to the first connecting port 2a may be neglected, which will not affect the opening and closing performance of the electromagnetic valve, and the one-way valve may not be provided in the inlet equilibrium hole 3a.

The inlet equilibrium hole 3a as an inlet flow passage and the one-way inlet valve 3b are arranged in the piston 3 hereinbefore. It is to be noted that, the inlet flow passage may also be designed in the main valve body 2. The inlet flow passage may be arranged in the main valve body 2 separately, and it may also be designed to be communicated with the outlet flow passage of the refrigerant. For example, the second flow passage 2-2 is designed with a branch flow passage leading to the piston cavity 4. The branch flow passage may be directly arranged in the main valve body 2 at an upper end, and a one-way valve is provided in the branch flow passage to communicate the second connecting port 2b with the piston cavity 4 in one way. Similarly, the first flow passage 2-1 may also be designed with a branch flow passage to communicate with the piston cavity 4 instead of the inlet equilibrium hole 3a. Such designs may all achieve the object of bidirectional opening and closing of the electromagnetic valve. Apparently, when the inlet flow passage is designed in the piston 3, the refrigerant may rapidly flow to the piston cavity 4, improving the response speed of opening and closing the electromagnetic valve.

In the electromagnetic valve, the first connecting port 2a may be arranged on the side wall of the main valve body 2, and the second connecting port 2b may be arranged at an end portion of the main valve body 2, correspondingly, the pilot valve body 1a is connected to another end portion. The first connecting port 2a and the second connecting port 2b are in such a design for facilitating the communication and non-communication of the two connecting ports via the piston 3.

For the above embodiments, the main valve body 2 may specifically include a valve seat 21 and a valve closure 22, as shown in Figures 3 to 7. Both of the first flow passage 2-1 and the second flow passage 2-2 may be arranged in the valve seat 21. The pilot valve body 1a is arranged on the side wall of the main valve body 2, i.e., on the side wall of the valve seat 21. In Figure 3, the pilot valve body 1a is arranged to an end of the valve seat 21 away from the valve port 2c, i.e., the pilot valve body 1a is arranged in a side wall of the main valve body 2 at a rear end. In this embodiment, the pilot valve body 1a is substantially perpendicular to the side wall of the main valve body 2, which forms an L-shaped bidirectional electromagnetic valve. It may be conceived that, a vertical arrangement may facilitate manufacturing and reduce pressure loss of the respective flow passage. Apparently, a non-perpendicular arrangement is also feasible.

The pilot valve flow passage 21d is arranged in the side wall of the valve seat 21. The pilot valve flow passage 21d is required to communicate the piston cavity 4 with the pilot valve cavity 11a. The piston 3 is provided between the piston cavity 4 and the valve port 2c. When the pilot valve body 1a is arranged in the side wall of the valve seat 21 at the rear end away from the valve port 2c, a short pilot valve flow passage 21d may communicate the piston cavity 4 and the pilot valve cavity 11a. As shown in Figure 3, the pilot valve flow passage 21d is substantially perpendicular to the main valve body 2 (through the valve seat 21 and the valve closure 22), thus the length is relatively small, which facilitates manufacturing.

The main valve body 2 is configured as a valve seat 21 and a valve closure 22 separated from each other, which facilitates assembling the piston 3 and the components in the piston cavity 4 such as the spring. Furthermore, such split-type design facilitates manufacturing the first flow passage 2-1 and the second flow passage 2-2 as desired. In addition, the rear valve chamber 2e is formed by assembling the valve closure 22 and the valve seat 21. As shown in Figure 7, an annular groove 221 is provided on the valve closure 22. When the valve closure 22 is mounted into the valve seat 21, the annular groove 221 and an inner wall of the valve seat 21 form the rear valve chamber 2e apart from the piston cavity 4. After the rear valve chamber 2e is provided, the first flow passage 2-1 and the second flow passage 2-2 may be arranged in a longitudinal direction of the valve seat 21 for facilitating manufacturing. In Figure 4, the second flow passage 2-2 is arranged substantially in the longitudinal direction, and a transitional passage inclined towards the second connecting port 2b is further provided at one end of the second flow passage 2-2 in order to achieve the communication of the second flow passage 2-2 and the second connecting port 2b. In addition, the provided rear valve chamber 2e may be understood as a common portion of the first flow passage 2-1 and the second flow passage 2-2, thus achieving controlling the communication and non-communication of the two flow passages via the same pilot valve port in a simple manner and facilitating the cooperative arrangement of the pilot valve port and the pilot valve head 11. In addition, the rear valve chamber 2e may also be regarded as a common portion of the first flow passage 2-1 and the second flow passage 2-2, i.e., a part of the flow passages is formed by the space of the valve cavity, which further reduces the manufacturing difficulty.

It may be appreciated that, the rear valve chamber 2e may also not be provided. For example, the first flow passage 2-1 may be configured as a curve passage, and the first flow passage 2-1 in Figure 3 may extend in the circumferential direction of the valve seat 21 till it is communicated with the pilot valve port. The second flow passage 2-2 may be designed similarly. In such a design, the strokes of the two flow passages will be increased, and the response speed is lower than the response speed of the embodiment in which the rear valve chamber 2e is provided.

In addition, the communication of the first flow passage 2-1 and the second flow passage 2-2 to the same valve port is simply achieved by providing the rear valve chamber 2e, thus allowing the communication and non-communication of the two flow passages and the pilot valve cavity 11a to be controlled by opening one pilot valve port. It may be appreciated that, the pilot valve cavity 11a may be provided with two pilot valve ports, and the two flow passages are respectively communicated with the pilot valve ports, and the pilot valve head 11 may also be provided with two corresponding steel balls 111 or other blocking components for blocking the two pilot valve ports. However, apparently, the structure of this embodiment is simpler and is easy to manufacture.

It is to be noted that, in the above embodiment, the first flow passage 2-1 and the second flow passage 2-2 is configured to respectively communicate the pilot valve port with the first connecting port 2a and the second connecting port 2b, since the first flow passage 2-1 and the second flow passage 2-2 are required to be prevented from being communicated with each other directly when the communication and non-communication of the first flow passage 2-1, the second flow passage 2-2 and the pilot valve cavity 11a are controlled by the same pilot valve port. In the case that the pilot valve cavity 11a has two pilot valve ports respectively corresponding to the first flow passage 2-1 and the second flow passage 2-2, the first flow passage 2-1 and he second flow passage 2-2 are not communicated with each other, in this case, the first one-way valve 215 and the second one-way valve 216 may not be provided.

In the above embodiment, a separated-type main valve body 2 is employed, In practical, an integral main valve body 2 may also be feasible. The pilot valve head 11 may be connected to the side wall of the main valve body 2, and internal members may be assembled at one end of the main valve body 2. In this case, the simplicity of the manufacture and assembly process may be inferior to those of the separated-type design.

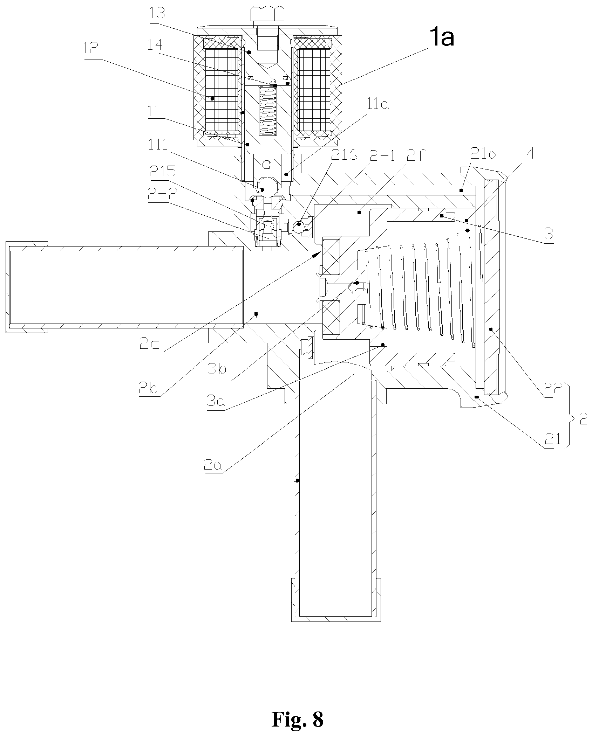

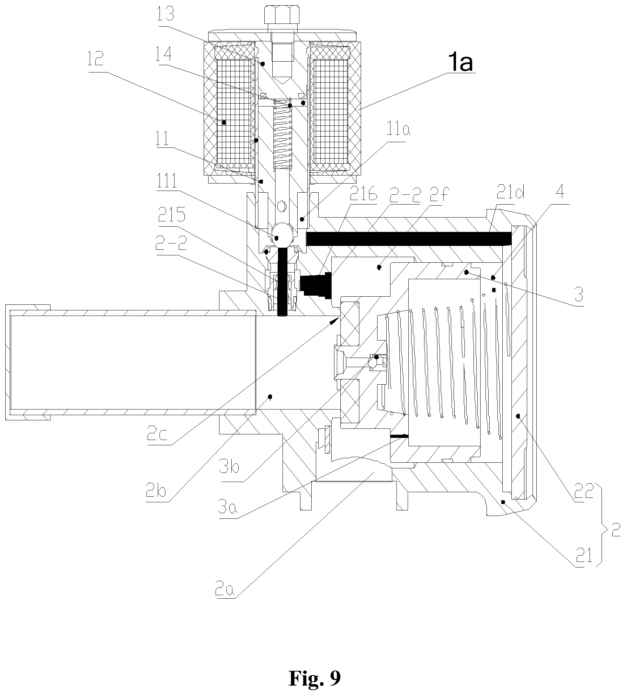

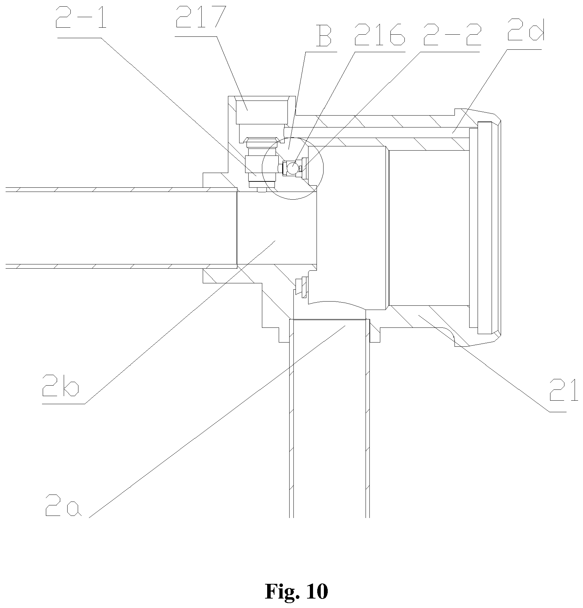

Reference is made to Figures 8 to 9 continuously. Figure 8 is an axial sectional view of a bidirectional electromagnetic valve according to a second embodiment of the present application. Figure 9 is a schematic view indicating flow passages in Figure 8. Figure 9 indicates the flow passages by black portions for ease of observing. Figure 10 is a schematic view showing the structure of a valve seat of the bidirectional electromagnetic valve in Figure 8.

The difference between this embodiment and the first embodiment mainly lies in that the pilot valve body 1a is arranged at a different position. Correspondingly, the arrangement for the two flow passages and the pilot valve flow passage 21d may also be varied.

The pilot valve body 1a is arranged at an end of the valve seat 21 close to the valve port 2c, and the pilot valve body 1a is arranged at a front side wall of the main valve body 2. Such design may achieve the communication between the pilot valve cavity 11a and the two connecting ports even if the first flow passage 2-1 and the second flow passage 2-2 have a small length and reduces the manufacturing difficulties of the two flow passages.

Further, the pilot valve body 1a is in a position corresponding to the second connecting port 2b, and the length of the second flow passage 2-2 may be further reduced, as shown in Figure 9.

Since the pilot valve body 1a is in a position corresponding to the second connecting port 2b, the main valve body 2 is further provided with a front valve chamber 2f, as shown in Figure 9. The front valve chamber 2f is similar to the rear valve chamber 2e, and the difference between the front valve chamber 2f and the rear valve chamber 2e lies in that, the front valve chamber 2f only provides the communication of the first flow passage 2-1 and the pilot valve port since the second flow passage 2-2 may be communicated to the second connecting port 2b just by directly passing through the side wall of the main valve body 2. The piston 3 may be provided with a step at its front end close to the valve port 2c, and the front valve chamber 2f is formed between a wall of the step and the inner wall of the valve seat 21. The arrangement of the front valve chamber 2f further reduces the length of the first flow passage 2-1 on the basis of shortening the second flow passage 2-2. In practical, the front valve chamber 2f may also be regarded as a portion of the first flow passage 2-1, which forms a portion of the flow passage by the space in the valve cavity, and reduces the manufacturing difficulties. In addition, the arrangement of the front valve chamber 2f also facilitates the arranging the inlet equilibrium hole 3a, which allows the inlet equilibrium hole 3a arranged at any position at a front end of the piston 3 in a circumferential direction to achieve the communication between the piston cavity 4 and the first connecting port 2a.

In addition, in Figure 9, the refrigerant passing through the front valve chamber 2f enters into the first flow passage 2-1, and the first flow passage 2-1 is further communicated with the second flow passage 2-2, then the refrigerant flows to the pilot valve port. Such design facilitates controlling the communication of the pilot valve cavity 11a and the first flow passage and of the pilot valve cavity 11a and the second flow passage by the same pilot valve port. Apparently, the first flow passage 2-1 is connected to a portion in the second flow passage 2-2 between the second one-way valve 215 and the pilot valve port.

The pilot valve body 1a is arranged at an end of the valve seat 21 close to the valve port 2c.

In this embodiment, controlling the communication and non-communication of the two flow passages by the same pilot valve port is achieved as follows. As shown in Figure 8, the first flow passage 2-1 is directly communicated with the second flow passage 2-2. Apparently, the first flow passage 2-1 is communicated to the second flow passage 2-2 at a position between the pilot valve port and the second one-way valve 215, which can be regarded as a common portion of the second flow passage 2-2 and the first flow passage 2-1, in order to communicate both the first flow passage and the second flow passage to the pilot valve port, achieving controlling the communication and non-communication of the two flow passages by the same pilot valve port. This communication method facilitates the cooperative arrangement of the pilot valve port and the pilot valve head 11 while achieving controlling the communication and non-communication of the two flow passages by the same pilot valve port.

For each of the above embodiments, the pilot valve body 1a, the main valve body 2, the first connecting port 2a, and the second connecting port 2b may be located in the same axial sectional view, and, the pilot valve body 1a is opposite to the first connecting port 2a arranged on the side wall of the main valve body 21, such that the electromagnetic valve may have a relatively well-balanced design and a good stability.

In the case that the main valve body 2 is designed in a separated-type, a groove 217 may be provided at the valve seat 21 at a position facing the pilot valve body 1a, and the pilot valve port is also arranged in the groove 217. After the pilot valve head 11 of the pilot valve body 1a is inserted in the groove 217, the pilot valve cavity 11a is formed, as shown in Figures 3 to 5, achieving the design of the pilot valve cavity 11a and the pilot valve port easily.

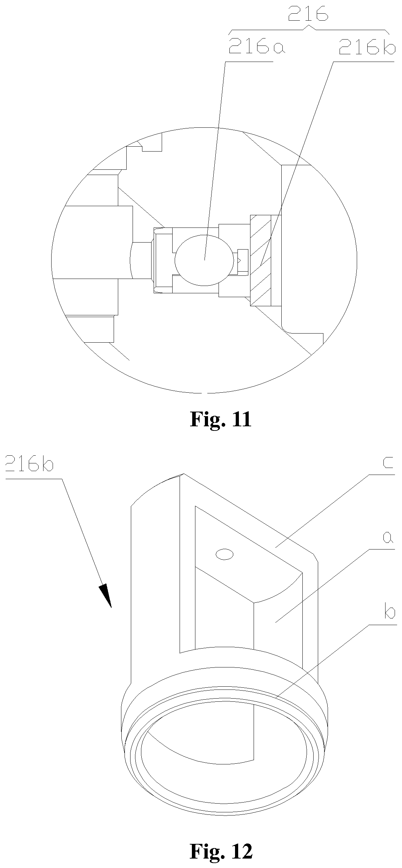

Reference is made to Figures 11 to 12 continuously. Figure 11 is a partially enlarged schematic view showing part B in Figure 10. Figure 12 is a schematic view showing the structure of a stop ring in Figure 11.

A stop ring 216b may be arranged in the first flow passage 2-1. The stop ring 216b has a base ring b, side walls a, a top wall c, as shown in Figure 12. Two sides of the base ring b extend upward to form two side walls a, and the two side walls a are connected via the top wall c. After the stop ring 216b is arranged in the first flow passage 2-1, the seal ball 216a may be arranged in a space formed by the base ring b, two side walls a, and the top wall c for forming the first one-way valve 216. In the usage of the one-way valve, the two side walls b play a guiding and supporting function. Compared with a conventional one-way valve, the seal ball 216a of the one-way valve of this structure can block or open the valve port of the one-way valve flexibly under the refrigerant without deviating from the center of the valve port. It may be conceived that, in proper situation, other one-way valves may also employ this structure in addition to the first one-way valve 216, which is not described herein.

A bidirectional electromagnetic valve according to the present application is described in detail hereinbefore. The principle and the embodiments of the present application are illustrated herein by specific examples. The above description of examples is only intended to help the understanding of the method and idea of the present application. It should be noted that, for the person skilled in the art, a few of modifications and improvements may be made to the present application without departing from the principle of the present application, and these modifications and improvements are also deemed to fall into the scope of the present application defined by the claims.

## Claims

1. A bidirectional electromagnetic valve, comprising a main valve body (2), a pilot valve body (1a), wherein a piston (3) is provided in a valve cavity formed by the main valve body (2) and a piston cavity (4) is formed, and the main valve body (2) is provided with a first connecting port (2a) and a second connecting port (2b) which are configured to be communicated or not communicated with each other by the piston (3), the bidirectional electromagnetic valve further comprises a first flow passage (2-1) and a second flow passage (2-2) which are in communication with the first connecting port (2a) and the second connecting port (2b), respectively, for a refrigerant flowing out, wherein
both of the first flow passage (2-1) and the second flow passage (2-2) are arranged in the main valve body (2);
a pilot valve flow passage (21d) is further provided in the main valve body (2), the piston cavity (4) is in communication with a pilot valve port in the pilot valve body (1a) via the pilot valve flow passage (21d); and
a pilot valve head (11) of the pilot valve body (1a) is moved to open or close the pilot valve port, which allows the first flow passage (2-1) and the second flow passage (2-2) to be communicated or not communicated with the piston cavity (4),
wherein the pilot valve body (1a) is arranged on a side wall of the main valve body (2),
wherein the first connecting port (2a) is arranged on the side wall of the main valve body (2), and the second connecting port (2b) is arranged at an end, provided with a valve port (2c), of the main valve body (2),
wherein an annular front valve chamber (2f) for communicating with the first connecting port (2a) is formed between an outer wall of the piston (3) at an end close to the valve port (2c) and an inner wall of the main valve body (2), the first flow passage (2-1) is in communication with the first connecting port (2a) via the front valve chamber (2f); **characterized in that**
the pilot valve body (1a) is located at the end of the side wall, close to the valve port (2c), of the main valve body (2); and
the pilot valve body (1a) is in a position corresponding to the position of the second connecting port (2b).

2. The bidirectional electromagnetic valve according to claim 1, wherein the bidirectional electromagnetic valve has one pilot valve port; and a one-way valve is provided in each of the first flow passage (2-1) and the second flow passage (2-2), which respectively allows the pilot valve port to be communicated with the first connecting port (2a) and the pilot valve port to be communicated with the second connecting port (2b).

3. The bidirectional electromagnetic valve according to claim 2, wherein the first flow passage (2-1) is in communication with the second flow passage (2-2) at a position between the one-way valve (215) of the second flow passage (2-2) and the pilot valve port.

4. The bidirectional electromagnetic valve according to any one of claims 1 to 3, wherein the pilot valve flow passage (21d) is arranged in a longitudinal direction of the main valve body (2).

5. The bidirectional electromagnetic valve according to any one of claims 1 to 4, comprising a pilot valve cavity (11a), wherein the piston cavity (4) is in communication with the pilot valve cavity (11a) via the pilot valve flow passage (21d); and in the case that the pilot valve port is opened, both of the first flow passage (2-1) and the second flow passage (2-2) are in communication with the piston cavity (4) via the pilot valve cavity (11a).

6. The bidirectional electromagnetic valve according to any one of claims 1 to 5, wherein a movable iron core provided in the pilot valve body (1a) is the pilot valve head (11).

7. The bidirectional electromagnetic valve according to any one of claims 1 to 6, wherein the main valve body (2) comprises a valve seat (21) in a cylindrical shape and a valve closure (22) located at one end of the valve seat (21).

## Patentansprüche

1. Bidirektionales elektromagnetisches Ventil, umfassend einen Hauptventilkörper (2), einen Steuerventilkörper (1a), wobei ein Kolben (3) in einem Ventilhohlraum bereitgestellt ist, gebildet durch den Hauptventilkörper (2), und ein Kolbenhohlraum (4) gebildet ist, und der Hauptventilkörper (2) mit einem ersten Verbindungsstutzen (2a) und einem zweiten Verbindungsstutzen (2b) bereitgestellt ist, die konfiguriert sind, um mit dem anderen Kolben (3) zu kommunizieren oder nicht zu kommunizieren, das bidirektionale elektromagnetische Ventil weiter einen ersten Strömungsdurchgang (2-1) und einen zweiten Strömungsdurchgang (2-2) umfasst, die mit dem ersten Verbindungsstutzen (2a) bzw. dem zweiten Verbindungsstutzen (2b) für ein Kühlmittel, das ausfließt, in Kommunikation stehen, wobei
sowohl der erste Strömungsdurchgang (2-1) als auch der zweite Strömungsdurchgang (2-2) im Hauptventilkörper angeordnet sind (2);
ein Steuerventil-Strömungsdurchgang (21d) weiter im Hauptventilkörper (2) bereitgestellt ist, der Kolbenhohlraum (4) mit einem Steuerventilstutzen im Steuerventilkörper (1a) mit Hilfe des Steuerventil-Strömungsdurchgangs (21d) in Kommunikation steht; und
ein Steuerventilkopf (11) des Steuerventilkörpers (1a) bewegt wird, um den Steuerventilstutzen zu öffnen oder zu schließen, wodurch ermöglicht wird, dass der erste Strömungsdurchgang (2-1) und der zweite Strömungsdurchgang (2-2) mit dem Kolbenhohlraum (4) kommunizieren oder nicht kommunizieren,
wobei der Steuerventilkörper (1a) auf einer Seitenwand des Hauptventilkörpers (2) angeordnet ist.
wobei der erste Verbindungsstutzen (2a) auf der Seitenwand des Hauptventilkörpers (2) angeordnet ist und der zweite Verbindungsstutzen (2b) an einem Ende, bereitgestellt mit einem Ventilstutzen (2d), des Hauptventilkörpers (2), angeordnet ist,
wobei eine ringförmige vordere Ventilkammer (2f) zur Kommunikation mit dem ersten Verbindungsstutzen (2a) zwischen einer äußeren Wand des Kolbens (3) und anderen Ende nahe dem Ventilstutzen (2c) und einer inneren Wand des Hauptventilkörpers (2) angeordnet ist, der erste Strömungsdurchgang (2-1) in Kommunikation mit dem ersten Verbindungsstutzen (2a) mit Hilfe der vorderen Ventilkammer (2f) steht; **dadurch gekennzeichnet, dass** sich der Steuerventilkörper (1a) am Ende der Seitenwand befindet, nahe am Ventilstutzen (2c) des Hauptventilkörpers (2); und
der Steuerventilkörper (1a) in einer Position ist, die der Position des zweiten Verbindungsstutzens (2b) entspricht.

2. Bidirektionales elektromagnetisches Ventil nach Anspruch 1, wobei das bidirektionale elektromagnetische Ventil einen Steuerventilstutzen aufweist; und ein Einwegventil in jedem des ersten Strömungsdurchgangs (2-1) und des zweiten Strömungsdurchgangs (2-2) bereitgestellt ist, wodurch jeweils ermöglicht wird, dass der Steuerventilstutzen mit dem ersten Verbindungsstutzen (2a) in Kommunikation steht und der Steuerventilstutzen mit dem zweiten Verbindungsstutzen (2b) in Kommunikation steht.

3. Bidirektionales elektromagnetisches Ventil nach Anspruch 2, wobei der erste Strömungsdurchgang (2-1) mit dem zweiten Strömungsdurchgang (2-2) an einer Position zwischen dem Einwegventil (215) des zweiten Strömungsdurchgangs (2-2) und dem Steuerventilstutzen im Kommunikation steht.

4. Bidirektionales elektromagnetisches Ventil nach einem der Ansprüche 1 bis 3, wobei der Steuerventil-Strömungsdurchgang (21d) in einer Längsrichtung des Hauptventilkörpers (2) angeordnet ist.

5. Bidirektionales elektromagnetisches Ventil nach einem der Ansprüche 1 bis 4, umfassend einen Steuerventilhohlraum (11a), wobei der Kolbenhohlraum (4) mit dem Steuerventilhohlraum (11a) über den Steuerventil-Strömungsdurchgang (21d) in Kommunikation steht; und, für den Fall, dass der Steuerventilstutzen geöffnet ist, sowohl der erste Strömungsdurchgang (2-1) als auch der zweite Strömungsdurchgang (2-2) mit dem Kolbenhohlraum (4) mit Hilfe des Steuerventilhohlraums (11a) in Kommunikation steht.

6. Bidirektionales elektromagnetisches Ventil nach einem der Ansprüche 1 bis 5, wobei ein beweglicher Eisenkern, der im Steuerventilkörper (1a) bereitgestellt ist, der Steuerventilkopf (11) ist.

7. Bidirektionales elektromagnetisches Ventil nach einem der Ansprüche 1 bis 6, wobei der Hauptventilkörper (2) einen Ventilsitz (21) in zylindrischer Form und einen Ventilverschluss (22) aufweist, der sich an einem Ende des Ventilsitzes (21) befindet.

## Revendications

1. Electrovanne bidirectionnelle, comprenant un corps de vanne principal (2), un corps de vanne pilote (1a), dans laquelle un piston (3) est prévu dans une cavité de vanne formée par le corps de vanne principal (2) et une cavité de piston (4) est formée, et le corps de vanne principal (2) est pourvu d'un premier orifice de liaison (2a) et d'un deuxième orifice de liaison (2b) qui sont configurés pour être mis en communication ou ne pas être mis en communication l'un avec l'autre par le piston (3), l'électrovanne bidirectionnelle comprend en outre un premier passage d'écoulement (2-1) et un deuxième passage d'écoulement (2-2) qui sont respectivement en communication avec le premier orifice de liaison (2a) et le deuxième orifice de liaison (2b), pour un écoulement de fluide frigorigène, dans laquelle
le premier passage d'écoulement (2-1) et le deuxième passage d'écoulement (2-2) sont tous deux agencés dans le corps de vanne principal (2) ;
un passage d'écoulement de vanne pilote (21d) est en outre prévu dans le corps de vanne principal (2), la cavité de piston (4) est en communication avec un orifice de vanne pilote dans le corps de vanne pilote (1a) par l'intermédiaire du passage d'écoulement de vanne pilote (21d) ; et
une tête de vanne pilote (11) du corps de vanne pilote (1a) est déplacée pour ouvrir ou fermer l'orifice de vanne pilote, ce qui permet au premier passage d'écoulement (2-1) et au deuxième passage d'écoulement (2-2) de communiquer ou ne pas communiquer avec la cavité de piston (4),
dans laquelle le corps de vanne pilote (1a) est agencé sur une paroi latérale du corps de vanne principal (2),
dans laquelle le premier orifice de liaison (2a) est agencé sur la paroi latérale du corps de vanne principal (2), et le deuxième orifice de liaison (2b) est agencé au niveau d'une extrémité, pourvue d'un orifice de vanne (2c), du corps de vanne principal (2),
dans laquelle une chambre de vanne avant annulaire (2f) pour communiquer avec le premier orifice de liaison (2a) est formée entre une paroi extérieure du piston (3) au niveau d'une extrémité à proximité de l'orifice de vanne (2c) et une paroi intérieure du corps de vanne principal (2), le premier passage d'écoulement (2-1) est en communication avec le premier orifice de liaison (2a) par l'intermédiaire de la chambre de vanne avant (2f) ; **caractérisée en ce que**
le corps de vanne pilote (1a) est situé à l'extrémité de la paroi latérale, à proximité de l'orifice de vanne (2c), du corps de vanne principal (2) ; et
le corps de vanne pilote (1a) est à une position correspondant à la position du deuxième orifice de liaison (2b).

2. Electrovanne bidirectionnelle selon la revendication 1, dans laquelle l'électrovanne bidirectionnelle comporte un orifice de vanne pilote ; et une vanne unidirectionnelle est prévue dans chacun du premier passage d'écoulement (2-1) et du deuxième passage d'écoulement (2-2), ce qui permet respectivement à l'orifice de vanne pilote de communiquer avec le premier orifice de liaison (2a) et à l'orifice de vanne pilote de communiquer avec le deuxième orifice de liaison (2b).

3. Electrovanne bidirectionnelle selon la revendication 2, dans laquelle le premier passage d'écoulement (2-1) est en communication avec le deuxième passage d'écoulement (2-2) à une position entre la vanne unidirectionnelle (215) du deuxième passage d'écoulement (2-2) et l'orifice de vanne pilote.

4. Electrovanne bidirectionnelle selon l'une quelconque des revendications 1 à 3, dans laquelle le passage d'écoulement de vanne pilote (21d) est agencé dans une direction longitudinale du corps de vanne principal (2).

5. Electrovanne bidirectionnelle selon l'une quelconque des revendications 1 à 4, comprenant une cavité de vanne pilote (11a), dans laquelle la cavité de piston (4) est en communication avec la cavité de vanne pilote (11a) par l'intermédiaire du passage d'écoulement de vanne pilote (21d) ; et dans le cas où l'orifice de vanne pilote est ouvert, le premier passage d'écoulement (2-1) et le deuxième passage d'écoulement (2-2) sont tous deux en communication avec la cavité de piston (4) par l'intermédiaire de la cavité de vanne pilote (11a).

6. Electrovanne bidirectionnelle selon l'une quelconque des revendications 1 à 5, dans laquelle un noyau en fer mobile prévu dans le corps de vanne pilote (1a) est la tête de vanne pilote (11).

7. Electrovanne bidirectionnelle selon l'une quelconque des revendications 1 à 6, dans laquelle le corps de vanne principal (2) comprend un siège de vanne (21) d'une forme cylindrique et une fermeture de vanne (22) située à une extrémité du siège de vanne (21).
